# EUROPÄISCHE PATENTANMELDUNG

(11) **EP 1 779 733 A1**
(43) Veröffentlichungstag der Anmeldung: **02.05.2007**
(21) Anmeldenummer: 06022128.0
(22) Anmeldetag: 23.10.2006
(51) Int. Cl.: A22C 11/00

(54) **Verfahren und Vorrichtung für die Herstellung von darmlosen Würstel mit gekrümmter Form**

(30) Priorität: 26.10.2005 IT BZ20050055
(71) Anmelder: Recla Srl - GmbH, 39028 Silandro BZ (IT)
(72) Erfinder: Recla, Luigi, 39020 Stelvio (BZ) (IT)
(74) Vertreter: Oberosler, Ludwig

(57) **Zusammenfassung**

Herstellungsverfahren für darmlose Würstel mit gekrümmter Form, wobei die bekannten darmlosen Würstel welche geradlinige Form aufweisen, während des Einlegens in eine Verpackungsschale (2) welche eine oder mehrere gekrümmte Mulden (4) aufweist gekrümmt werden, wobei die gekrümmte Form welche das Würstel einnimmt durch die Verpackungsschale (2) bis zum Öffnen der Verpackungsschale und der Entnahme des Würstels (6) aus der Mulde (4) beibehalten wird und wobei das entnommene Würstel (6) eine wesentlich gekrümmte Form beibehält.

## Beschreibung

Die Würstel von der Art "Frankfurter", "Wiener", "Servelade" und dergleichen, welche in Lammdarm, bzw. in Schweinedarm, abgefüllt sind, nehmen eine gekrümmte Form an weil der Naturdarm die Tendenz hat sich Kreisbogen-förmig auszurichten. Die Würstel welche diese gekrümmte Form aufweisen erwecken den Anschein, dass sie handwerklich und auf traditionelle Weise hergestellt worden sind. Mit der Verbreitung der Herstellung und des Verkaufs von Würstel der obgenannten Art in Ländern wo der Verbraucher gewohnt ist Würste und dergleichen, erst nach Abziehen des Darms, zu verzehren, hat sich die Herstellung und Vermarktung der obgenannten Würstel ohne Darm durchgesetzt. Es ist bekannt, dass bei der Produktion der darmlosen Würstel und dergleichen das Würstelbrät während der Garung, der Trocknung und der Räucherung welche beim Durchlauf durch bekannte Anlagen eines mehr oder weniger industrialisierten und automatisierten Herstellungsprozesses erfolgt, in einem Zellulosedarm abgefüllt ist. Das auf diese Weise hergestellte Würstel präsentiert sich mit geradliniger Längsachse um anschließend einer bekannten "Schnellenthäutung" unterzogen zu werden welche wesentlich darin besteht dass der Zellulosedarm in Längsrichtung mechanisch aufgeschnitten wird und, unter Einwirkung von heißem Wasserdampf, abgezogen wird. Natürlich präsentieren sich die nach dem obgenannten Verfahren erzeugten Würstel mit geradliniger Längsachse; dieses Merkmal wird in einem gewissen Sinn von den großen Herstellern gefordert, weil es die Voraussetzung für die anschließende hoch mechanisierte Verpackung des Produktes darstellt.

Die Erfindung stellt sich die Aufgabe ein Verfahren und die entsprechende Vorrichtung für die Herstellung gekochter Würstel und dergleichen zu entwickeln welche zwar darmlos sind aber sich mit gekrümmter Form, ähnlich wie jene welche im traditionalem Darm abgefüllt sind, präsentieren, weiters soll ein mechanisierbares Verpackungsverfahren vorgesehen werden.

Zur Lösung dieser Aufgabe schlägt die Erfindung vor die Würstel, bzw. die ähnlichen gekochten Wurstwaren, welche auf bekannte Weise unter Anwendung des Zellulosedarms gefertigt, gekocht und geräuchert worden sind und sich, infolge "Schnellenthäutung" mit geradliniger Längsachse präsentieren, einer Krümmung zu unterziehen um, innerhalb einer spezifischen Verpackung welche geeignet ist die gekrümmte Form beizubehalten, diese Krümmung auch infolge der Entnahme aus der Verpackung dauerhaft beizubehalten.

Erfindungsgemäß wird, zur Krümmung der "schnellenthäuteten" Würstel und zwecks Beibehaltung der gekrümmten Form und Vereinfachung der Verpackung der gekrümmten Würstel, eine Verpackungsschale vorgeschlagen welche von mindestens einer, vorzugsweise von mehreren anliegenden ausgeformten Mulden gekennzeichnet ist welche geeignet sind die gekrümmten Würstel aufzunehmen und die besagte gekrümmte Form beizubehalten.

Die mit ausgeformten Mulden versehene Verpackungsschale ist vorteilhaft durch Thermoformung aus einem durchsichtigen lebensmittelgerechtem Kunststofflaminat hergestellt. Der Prozess der Thermoformung ist von bekannter Art und wird, z.B. durch Vakuum-Tiefziehen in eine Negativform, ohne Gegenform, durchgeführt. Um der Tendenz der gekrümmten Würstel, sich wieder geradlinig auszurichten, entgegenzuwirken und um der Verpackungsschale eine genügende Steifheit und Formstabilität zu verleihen, schlägt die Erfindung vor, dass zwischen jeder der Mulden welche die einzelnen Würste aufnehmen, eine Trennwand vorgesehen ist welche, vorzugsweise im mittleren Bereich der Längserstreckung der Mulden in die Ebene ragt welche den oberen Schalenrand enthält, während in den Bereichen welche den abgerundeten Endbereichen der einzelnen Würstel entsprechen, diese Trennwand gegen die Ebene abfällt welche den Boden der Verpackungsschale enthält. Diese Trennwand zwischen den Mulden wirkt für die gesamte Verpackungsschale als ausgeprägte Versteifungsrippe und dient dazu, dass die Form, trotz der Belastungen welche seitens der eingelegten Würstel wegen ihrer Tendenz sich elastisch nach einer geradlinigen Längsachse auszurichten, beibehalten wird. Die Würstel verlieren, nach Beibehaltung der gekrümmten Form, nach einer teilweisen plastischen Verformung, nach Abkühlung auf die Lagerungstemperatur und infolge des Verlustes der Plastizität der Würstelmasse, mindestens teilweise die Tendenz die gerade Ausrichtung, auch infolge Entnahme aus der Verpackung, wiederzugewinnen und präsentieren sich in der typischen Form der traditionellen Würstel im tierischen Darm.

Erfindungsgemäß kann die mit gekrümmten Mulden versehene Verpackungsschale eine Muldentiefe aufweisen welche ca. dem Durchmesser der Würstel entspricht und mit einem durchsichtigen Kunststofflaminat verschlossen werden; die Schale kann jedoch auch eine Muldentiefe aufweisen welche ca. der Hälfte des Würsteldurchmessers entspricht um durch eine identische oder ähnliche Schale, mit Mulden welche ca. der Hälfte des Würsteldurchmessers entsprechen, verschlossen zu werden.

Die Verpackung der Würstel kann auf einfache Weise erfolgen indem die Würstel händisch oder mechanisch mit dem Mittelbereich entsprechend dem Mittelbereich der Mulden auf die Verpackungsschale gelegt werden, die Würstel dringen durch den Druck von oben, welcher von der Verschlussfolie während der Luft-Absaugphase bei der bekannten Herstellung der Vakuum-Verpackung, ausgeübt wird, in die gekrümmten Mulden ein. Beim vollständigen Eindringen der Würstel in die entsprechenden gekrümmten Mulden, erfahren diese eine Krümmung indem sie die gekrümmte Form der Mulden annehmen; dies weil die Krümmung der Mulden einen relativ großen Radius aufweist und somit die "äußere" Wand der Mulde als Einleitung für das Eindringen des Würstels in seiner gesamten Längserstreckung wirkt. Die Erfindung schließt allerdings nicht aus, dass die Würstel von einer Entnahme- und Einlegvorrichtung in gekrümmter Lage vorbereitet und gehalten werden um, im gekrümmten Zustand, in die einzelnen Mulden eingelegt zu werden wo sie in gekrümmter Position gehalten werden.

Die Erfindung wird anschließend, anhand einer in den beigelegten Zeichnungen schematisch dargestellten vorzuziehenden Vorrichtung zur Herstellung der Verpackungsschale welche geeignet ist darmlose gekrümmte Würstel zu verpacken und anhand eines erfindungsgemäßen Verpackungsbeispieles von Würstel, näher erklärt.

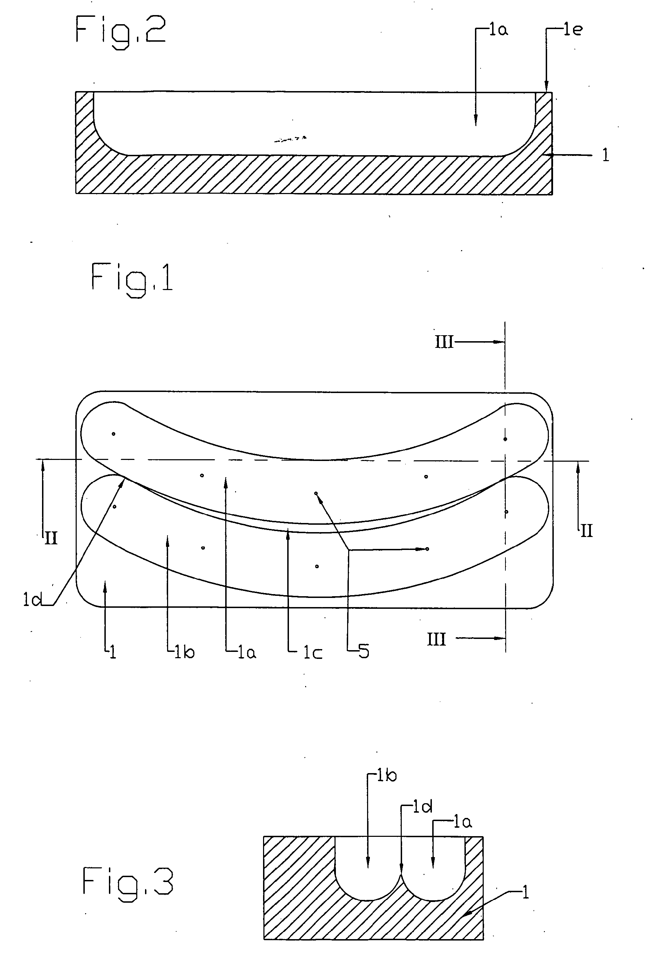

Die Fig. 1 zeigt die Draufsicht auf eine einfache erfindungsgemäße Form zur Herstellung, mittels Thermoformung durch Tiefziehen ohne Gegenform, einer Verpackungsschale mit zwei Mulden für die Einlage gekrümmter, darmloser Würstel.

Die Fig. 2 zeigt den Längsschnitt gemäß der in Fig. 1 gezeigten Schnittebene II-II, durch eine erfindungsgemäße Tiefziehform.

Die Fig. 3 zeigt den Querschnitt gemäß der in Fig. 1 gezeigten Schnittebene III-III, durch eine erfindungsgemäße Tiefziehform.

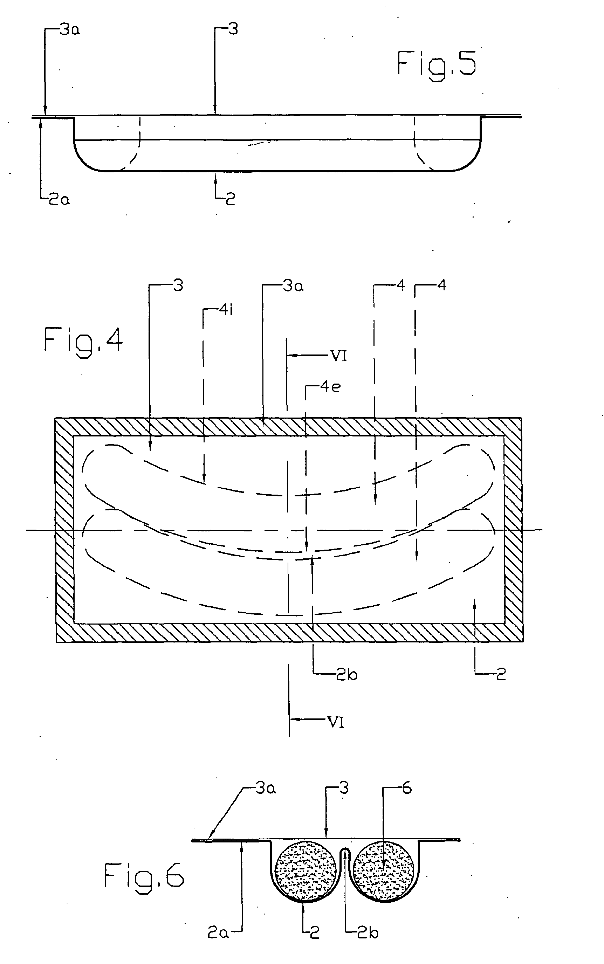

Die Fig. 4 zeigt die Draufsicht auf eine Verpackungsschale für darmlose, gekrümmte Würstel.

Die Fig. 5 zeigt die Seitenansicht der in Fig. 4 dargestellten Verpackungsschale.

Die Fig. 6 zeigt den Querschnitt gemäß der in Fig. 4 gezeigten, durch den Mittelbereich der Verpackungsschale mit zwei Würstel sich erstreckenden, Schnittebene VI-VI.

Die Verpackungsschale 2 ist erfindungsgemäß mit mindestens einer Mulde 4 für die Einlage eines darmlosen Würstels 6 ausgestattet, die Mulde 4 entspricht den Ausmaßen des zu verpackenden Würstels wobei jedoch die Mulde eine gekrümmte Form hat. Im Falle dass an der selben Verpackungsschale 2 mehrere zueinander anliegende Mulden 4 vorgesehen sind, ist zwischen diesen eine Trennwand 2b vorgesehen welche, im Bereich welcher dem Mittelbereich der Würstel entspricht, in die Ebene ragt welche den umlaufenden Rand 2a der Verpackungsschale enthält und an welchem der entsprechende umlaufende Rand 3a des Verschlusslaminates 3 verschweißt wird.

Die mit gekrümmten Mulden 4 ausgestattete Verpackungsschale 2 ist auf bekannte Weise, z. B. durch Thermoformung mittels einfacher Negativform 1, ohne Gegenform, durch Absaugen der Luft über einer Reihe von Bohrungen 5 und somit durch Tiefziehen des thermoplastischen Laminates in Richtung Boden der Mulde 4, herstellbar. Die Tiefziehform 1 ist, zwischen den Mulden 1a, 1 b welchen den Mulden 4 für die Einlage der Würstchen entsprechen, mit einer Erhebung 1 c ausgestattet welche der Trennwand 2b an der Verpackungsschale entspricht.

Das Verpackungsverfahren für die darmlosen Würstel, welche geradlinige Längsachse haben und auf bekannte Art hergestellt worden sind, schließt die Herstellung der Verpackungsschalen 2, die manuelle oder mechanische Anordnung der Würstel mit dem mittleren Abschnitt entsprechend dem mittleren Bereich der einzelnen Mulden 4, die Anbringung des Kunststofflaminates 3 durch Verschweißen längs den umlaufenden Rändern 3a welche den Rändern 2a der Verpackungsschale 2 entsprechen, das Einblasen von Luft mit anschließendem Absaugen der Luft und Versiegelung um eine Vakuumverpackung zu erhalten, ein. Durch das Anbringen des Kunststofflaminates 3 und/oder durch das Absaugen der Luft aus der Verpackung wird eine Kraft auf die Würstel 6 wirksam welche diese in die gekrümmten Mulden 4 drückt, wobei die Würstel 6, nachdem sie an den äußeren Flächen der Mulden 4, bzw. an den entsprechenden gekrümmten Trennwänden 2b gleiten, die gekrümmte Position der Mulde einnehmen. Dieser Arbeitsgang welcher das Eindringen der geradlinigen Würstel in die gekrümmten Mulden 4 bewirkt kann auch durch die Wirkung einer Druckrolle oder einer Druckplatte unterstützt werden.

Die Verformung der Würstel von der geradlinigen in die gekrümmte Form bewirkt dass das Brät des Würstels, entlang der gesamten Längserstreckung welche, ab der Längsachse, sich auf der Seite der inneren Krümmung 4i befindet, komprimiert wird, während das Brät, entlang der gesamten äußeren Krümmung 4e, einer Zugbelastung unterworfen wird. Diese auf das Brät wirkenden Belastungen bewirken, zusammen mit der Kühlung für die Lagerung, dass die Würstel, auch infolge nachträglicher Entnahme aus der Verpackungsschale 2, eine wesentlich gekrümmte Form beibehalten und sich wie traditionelle Würstel mit tierischem Darm präsentieren.

## Patentansprüche

1. Herstellungsverfahren für darmlose Würstel mit gekrümmter Form, **dadurch gekennzeichnet, dass** die bekannten darmlosen Würstel welche geradlinige Form aufweisen, während des Einlegens in eine Verpackungsschale (2) welche eine oder mehrere gekrümmte Mulden (4) aufweist, gekrümmt werden, dass die gekrümmte Form welche das Würstel einnimmt durch die Verpackungsschale (2) bis zum Öffnen der Verpackungsschale und der Entnahme des Würstels (6) aus der Mulde (4) beibehalten wird und dass das entnommene Würstel (6) eine wesentlich gekrümmte Form beibehält.

2. Herstellungsverfahren gemäß Anspruch 1, **dadurch gekennzeichnet, dass** die Krümmung der darmlosen Würstel welche geradlinige Form aufweisen, händisch oder mechanisch, vor dem Einlegen in die gekrümmten Mulden (4) welche an den Verpackungsschalen vorgesehen sind, erfolgt.

3. Herstellungsverfahren gemäß Anspruch 1, **dadurch gekennzeichnet, dass** die Krümmung der darmlosen Würstel welche geradlinige Form aufweisen, durch Auflegen der Würstel auf die Verpackungsschale (2) im Bereich der entsprechenden Mulden (4) und durch Druck in Richtung Boden der besagten Mulden mittels eigenem Stößel, durch Darüberrollen einer Druckwalze oder/und durch das Verschlußlaminat (3) der Verpackung, bei Absaugen der Luft um eine Vakuumverpackung zu erstellen, erfolgt.

4. Vorrichtung zur Herstellung von darmlosen Würstel welche gekrümmte Form aufweisen gemäß dem, in den Ansprüchen 1 und 3 angeführten Verfahren, **dadurch gekennzeichnet, dass** diese aus einer Station besteht in welcher die Verpackungsschalen (2) hergestellt werden auf welche eine Station folgt wo die geradlinigen Würstel auf die Schale aufgelegt werden und in die gekrümmten Mulden (4) der Verpackungsschale (2) eingedrückt werden, auf welche eine Station folgt auf welcher die Verpackungsschalen (2) welche die Würstel (6) enthalten verschlossen werden und auf welche eine Vakuumverpackungs- und Versiegelungsstation folgt.

5. Vorrichtung zur Herstellung darmloser Würstel welche gekrümmte Form aufweisen gemäß Anspruch 4, **dadurch gekennzeichnet, dass** die Verpackungsschale (2) eine oder mehrere zueinander anliegende Mulden (4) aufweist um die darmlosen geradlinigen Würstel (6) aufzunehmen, dass zwischen den Mulden (4) eine, im Mittelbereich der Mulde in die Ebene welche das Verschlusslaminat (3) enthaltet, vorstehende Wand (2b) aufweist und dass diese Wand (2b), im Bereich der beiden Enden der Mulde (4) zum Boden der Mulden (4) hin abfällt.

6. Vorrichtung gemäß Anspruch 5, **dadurch gekennzeichnet, dass** die Verpackungsschale (2) mit Mulden versehen ist welche eine, ungefähr dem halben Durchmesser der eingelegten Würstel (6) entsprechende, Tiefe aufweisen und dass diese Schale von einer zweiten, zur ersten identischen, Schale verschlossen wird welche die zweite Würstelhälfte aufnimmt.
